# Europäisches Patentamt
# European Patent Office
# Office européen des brevets

(11) Veröffentlichungsnummer: **0 103 242**
**B1**

(12) # EUROPÄISCHE PATENTSCHRIFT

(45) Veröffentlichungstag der Patentschrift:
04.01.89

(51) Int. Cl.⁴: **B 23 K 37/04**

(21) Anmeldenummer: 83108661.6

(22) Anmeldetag: 02.09.83

(54) Einrichtung zum Spannen und Zentrieren von zwei zusammenschweissenden Teilen.

(30) Priorität: 11.09.82 DE 3233796

(43) Veröffentlichungstag der Anmeldung:
21.03.84 Patentblatt 84/12

(45) Bekanntmachung des Hinweises auf die Patenterteilung:
04.01.89 Patentblatt 89/1

(84) Benannte Vertragsstaaten:
AT BE CH FR GB IT LI LU NL SE

(56) Entgegenhaltungen:
DE-A-1 965 665
DE-A-2 522 465
DE-A-2 708 040
DE-B-1 228 495
US-A-2 736 286
US-A-4 064 739

(73) Patentinhaber: Oxytechnik Ges. für Systemtechnik mbH, Frankfurter Strasse 10, D-6236 Eschborn 1 (DE)

(72) Erfinder: Hoffmann, Dieter, Scheureuer Strasse 89, D-5068 Odenthal (DE)

(74) Vertreter: Roesner, Werner, MESSER GRIESHEIM GmbH Patentabteilung Lärchenstrasse 137 Postfach 83 00 48, D-6230 Frankfurt 83 (DE)

EP 0 103 242 B1

LIBER, STOCKHOLM 1989

## Beschreibung

Die Erfindung betrifft eine Halte- und Zentriereinrichtung für zwei zusammenzuschweißende Teile, wobei die Teile in der gehaltenen und zentrierten Schweißposition zusammenschweißbar sind, mit einem Druckaggregat für ein Mittel, das mit Hilfe einer Steuereinrichtung einen Spanndorn betätigt, welcher Spannglieder aufweist, die über eine Betätigung der Steuereinrichtung radial zur Längsachse des Spanndornes verschiebbar sind und die radiale Verschiebung der Spannglieder über eine axiale Verschiebung von Spannkeilen erfolgt, welche an den Spanngliedern anliegen, siehe DE-A-2 708 040.

Eine solche vorgegebene Einrichtung soll im Maschinen-/Anlagenbau ein Sichern der räumlichen Lage zweier Werkstücke zueinander, beispielsweise eines Flansches und Rohres, gegen Verschieben und Verdrehen und eine Teil- oder Vollzentrierung durch Formschluß ermöglichen. Beim Schweißen der Werkstücke muß die Spannung, Zentrierung und/oder Formiergaszuführung (Broschüre Schutzgasschweißen, Messer Griesheim, Nr. 30.0007, Seite 313) und Unversehrtbarkeit der Einrichtung sichergestellt sein.

Es ist im Maschinen-/Anlagenbau bekannt, das Verbinden nicht rotationssymmetrisch aufgebauter Rohrleitungsanlagen aus Flansch bzw. Bördel gegen Rohr, nachfolgend Schweißteile genannt, derart vorzunehmen, daß die Sicherung der räumlichen Lage gegen Verschieben/Verdrehen mittels am Umfang der zu verbindenden Teile angebrachter Heftnähte und die Zentrierung durch Handausrichtung und/oder mittels Schweißzangen, Schraubstöcken, Prismen erfolgt.

Bei einer solchen Verbindung müssen eine Vielzahl von verschiedenartigen Verbindungsmitteln und eine größere Anzahl von Montagepersonal zur Herstellung der Schweißteilverbindungen bereitgestellt werden. Diese, unter hohen Fertigungszeiten und unter hohem Fertigungsaufwand hergestellte Schweißverbindung aus Flansch bzw. Bördel gegen Rohr weist in der Zentrierung ebenso wie in der Schweißnaht unterschiedliche und wechselhafte Gütewerte auf.

Von besonderer, die Güte der Zentrierung beeinflußender Bedeutung ist beispielsweise bei Flansch gegen Rohrverbindungen die Breite der am kegeligen Ansatz vorgesehenen zylindrischen Andrehung, deren Durchmesser dem Rohraußendurchmesser entspricht. So ist beispielsweise bei einem Vorschweißflansch 50/57 DIN, d. h. Vorschweißflansch-Nennweite 50 mm für einen Rohraußendurchmesser von 57 mm die Breite der Andrehung ungefähr 8 mm. Ein mit dieser Andrehung in Fluchtlinie zu bringendes Rohr stellt insbesondere dann hohe Anforderungen an das handwerkliche Geschick und die Erfahrung des Montagepersonals, wenn die Rohrlänge besonders groß ist. Diese Aufgabe, z. B. ein Vorschweißflansch 50/57 DIN, der mit einem rotationsunsymmetrischen Rohrleitungsanlagenteil von 2,4 Meter Länge verschweißt werden soll, stellt in der Praxis neben der Neumontage einen großen Prozentsatz aller bei der Reparatur von Rohrleitungsanlagen und bei der Montage/Verbindung derartiger Anlagenteile auf Baustellen anzutreffender Fälle dar. Die hierbei benötigte Ausricht-/Zentrierzeit beträgt ein Vielfaches der reinen Schweiß-/Verbindungszeit. Neben diesen Zentrierungen durch Formschluß zum Verbinden der Schweißteile sind die im Flansch befindlichen Schraubenlöcher bei Rohrleitungen und Armaturen so anzuordnen/auszurichten, daß sie symmetrisch zu den beiden Hauptachsen liegen, um eine symmetrische Lochstellung zu erreichen. Dies erfordert einen zusätzlichen Zentrieraufwand.

Die Güte der Schweißverbindung wird - vorausgesetzt werden konstante Schweißleistungen - von der Zentrierung der Schweißteile zueinander und der gleichmäßigen Nahtfugenfüllung beeinflußt. Bei einer Zentrierung von Hand bzw. mit Schweißzangen, ist ein Formschluß der Schweißteile und eine gleichmäßige Nahtfugenfüllung der durch Heftnähte teilausgefüllten Nahtfuge nur unzureichend erreichbar.

Um diese Nachteile zu vermeiden, wurden verschieden ausgebildete Halte- und Zentriereinrichtungen geschaffen, die entweder in der Art von handbetätigten mechanischen Spreizdornen (DE-AS-1 228 495, US-PS-2 736 286) oder als aufblasbarer Schlauch (US-PS-4 084 739) ausgebildet sind.

Bei den mechanischen Spreizdornen ist von Nachteil, daß sie schlecht zu handhaben sind, da die Spannkraft durch Drehen von Muttern (DE-AS-1 228 495) oder Handgriffen (US-PS-2 736 286) aufgebracht und während dieser Drehbewegung die Einrichtung mit der anderen Hand gehalten werden muß. Der auf einer Spindel drehbar gelagerte Anlageflansch muß zusätzlich mit der Hand in eine Positionierlage gedreht werden. Auch liegen die Spreizen bzw. Spreizhülsen durch die nur an einer Stelle auf sie wirkenden Kraftelemente mit ungleichmäßigen Kräften an der Innenkontur von Flansch bzw. Bördel und Rohr an, so daß keine genaue Zentrierung und sichere Spannung während des Schweißvorganges gewährleistet werden kann.

Bei den aufblasbaren Schläuchen ist zwar der obige Nachteil der Krafterzeugung durch den Anschluß an ein Druckaggregat gelöst, Nachteile ergeben sich jedoch auch in der Handhabung, insbesondere in der Einführung des flexiblen, noch nicht aufgeblasenen Schlauches in Flansch bzw. Bördel und Rohr. Da der Schlauch gegen mechanische und thermische Beschädigungen geschützt werden muß, ist an dem Anschlagflansch für Flansch bzw. Bördel ein Schutzrohr befestigt, in dem der Schlauch angeordnet ist. Dabei darf der Außendurchmesser des Schutzrohres nur unwesentlich kleiner sein, als der Innendurchmesser von Flansch bzw. Bördel und Rohr, da dessen Elastizität begrenzt ist. Mit einer derartigen Einrichtung kann immer nur ein Flansch- bzw. Bördel- und Rohr-Durchmesser zentriert und gehalten werden. Durch die Expansion des Schlauches wird das Schutzrohr mit seiner gesamten Außenfläche an die rohrförmige Innenfläche der Flansch- bzw. Bördel- und Rohr-Anordnung gepreßt. Hierzu muß einerseits eine hohe und damit kostenintensive Druckleistung zur Verfügung gestellt werden und andererseits ist durch die Flächenpressung keine sichere und genaue Zentrierung gewährleistet.

Aufgabe der Erfindung ist es, eine Halte- und Zentriereinrichtung zu schaffen, die einfach handhabbar ist und mit der ferner in einfacher Art und Weise und unter Vermeidung von Heftnähten sowie großer Betriebsnebenzeiten ein Formschluß der Schweißteile ermöglicht und in der räumlichen Lage gegen Verdrehen/Verschieben gesichert ist.

Diese Aufgabe wird erfindungsgemäß an einer Vorrichtung nach dem Oberbegriff durch die kennzeichnenden Merkmale von Patentanspruch 1 gelöst.

Um ein solches Spannwerkzeug universell - für verschiedene Rohrdurchmesser - einsetzbar zu gestalten, weist nach einer weiteren vorteilhaften Ausbildung der Erfindung das Spannwerkzeug eine Spannzange mit auswechselbaren Spanndornen zur Innenspannung auf.

Weitere vorteilhafte Ausbildungen sind in den Unteransprüchen und der Zeichnung der Erfindung angegeben.

Die mit der Erfindung erzielten Vorteile bestehen darin, daß durch die tragbare, leicht zu handhabende Halte- und Zentriervorrichtung eine Formschluß-Zentrierung und -Spannung und damit Verbindung der Schweißteile an einem beliebigen Ort der rotationsunsymmetrischen Rohrleitungsanlage innerhalb kurzer Zeit vorgenommen werden kann. Hierzu muß nur eine Drucksteuereinrichtung (Schalter) im Handgriff betätigt werden. Dabei beträgt die Zeitersparnis bei Einsatz des Spannwerkzeuges zwischen 30 und 50 %. Ein langwieriges und unter großem Personalaufwand erfolgendes ungenaueres Zentrieren entfällt ebenso, wie der Arbeitsgang Heften. Dadurch wird vorteilhaft im weiteren Arbeitsablauf ein Überschweißen der Heftnähte vermieden, was zu einer Erhöhung der Schweißnahtnahtgüte führt.

Ein weiterer wesentlicher Vorteil ist der einfache Aufbau und die unkomplizierte Bedienung der erfindungsgemäßen Einrichtung, die den Einsatz von ungeschultem/angelernten Personal ermöglicht. Dies ist insbesondere deshalb vorteilhaft, da die Zentrier- und Spannzeiten Betriebsnebenzeiten sind.

Ausführungsbeispiele der Erfindung sind in den Zeichnungen näher dargestellt und werden im folgenden unter Hinweis auf weitere vorteilhafte Merkmale näher beschrieben.

Es veranschaulicht:
Fig. 1 schematische Teile-Übersicht des Spannwerkzeuges;
Fig. 2 Seitenansicht der Spannzange in Vollschnitt-Darstellung;
Fig. 3 Draufsicht der Spannzange in Teilschnitt-Darstellung;
Fig. 4 Spanndorn zur Innenspannung eines V-Flansches gegen ein Rohr in Teilschnitt-Darstellung;
Fig. 5 Schweißteileübersicht des Spannwerkzeugs Spannzange/Spanndorn;
Fig. 6 Funktionsablauf des Spann-/Zentriervorganges mit dem Spannwerkzeug Spannzange/Spanndorn;
Fig. 7 Funktionsablauf der Schweißung eines gespannten/ zentrierten Schweißteils;
Fig. 8 perspektivische Darstellung der Anordnung der Spanneinheit Schweißzange/Spanndorn an einer rotationssymmetrischen Rohrleitung.

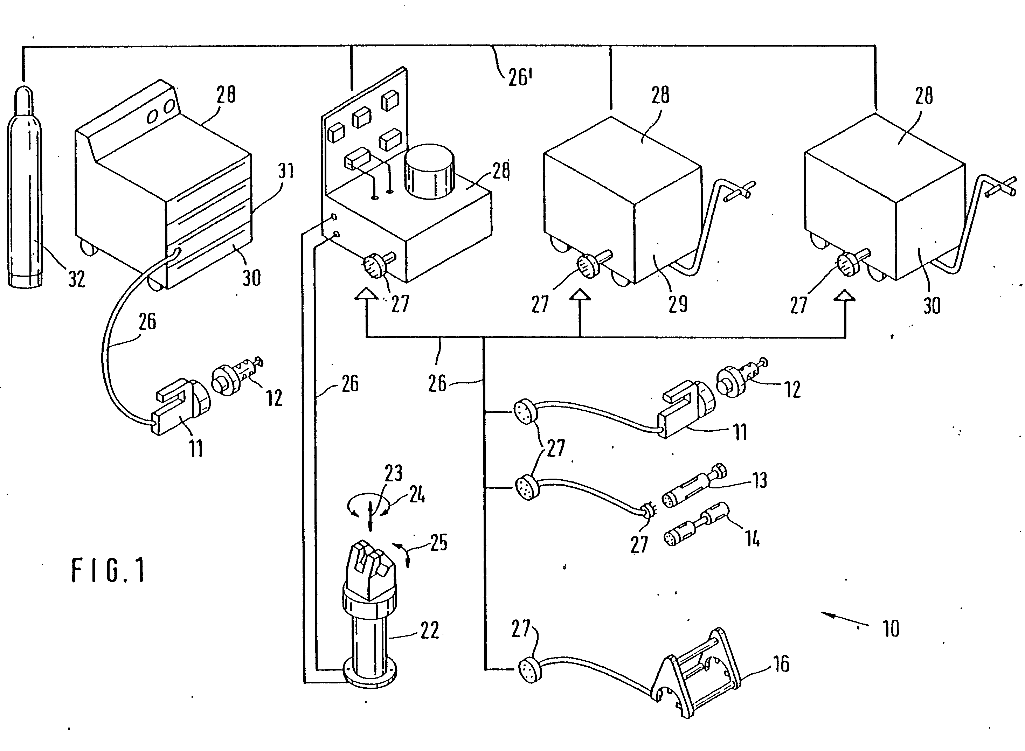

In Fig. 1 ist in schematischer Darstellung eine Teile-Übersicht der tragbaren, handbetätigbaren Halte- und Zentriereinrichtung 10 veranschaulicht, welche aus den Einheiten zur Innenspannung Spannzange 11/Spanndorne 12 für V-Flansch 17 und V-Bördel 18 gegen Rohr 19 - Verbindungen, Spanndorne 13 für Rohr 19 gegen ausgehalstes Rohr - Verbindungen, Spanndorne 14 für Rohr 19 gegen Rohr 19 - Verbindungen und der Einheit zur Außenspannung Spannvorrichtung 16 für Rohr 19 gegen Rohr 19 - Verbindungen besteht. Das Halten von teilgefertigten Schweißteilen (17, 18, 19) erfolgt in einem stationär angeordneten Zentrisch-Spannstock 22, der in der Höhe (Pfeilrichtung 23) verstellbar und um die Mittelachse dreh- (Pfeilrichtung 24) und kippbar (Pfeilrichtung 25) gelagert ist.

Die Halte- und Zentriereinrichtung 10, die Spannvorrichtung 16 und der Zentrisch-Spannstock 22 sind über Druckschläuche/ Rohre 26 und Schnellverschlußkupplungen 27 mit wahlweise fahrbaren/stationären hydraulischen Pumpenaggregaten 28 verbunden. Den hydraulischen Pumpenaggregaten 28 ist ein elektrischer 29 oder vorzugsweise pneumatischer Antrieb 30 zugeordnet. Bei Anschluß des hydraulischen Pumpenaggregates 28 an den pneumatischen Antrieb 30 ist die Verwendung eines Druckübersetzers 31 zur Umsetzung des max. Luftdruckes (Niederdruckteil) in einem max. ölseitigen Betriebsdruck (Hochdruckteil) erforderlich.

Zur Versorgung der Halte- und Zentriereinrichtung 10 mit Formiergas ist eine Schutzgasflasche 32 an das Versorgungsnetz angeschlossen.

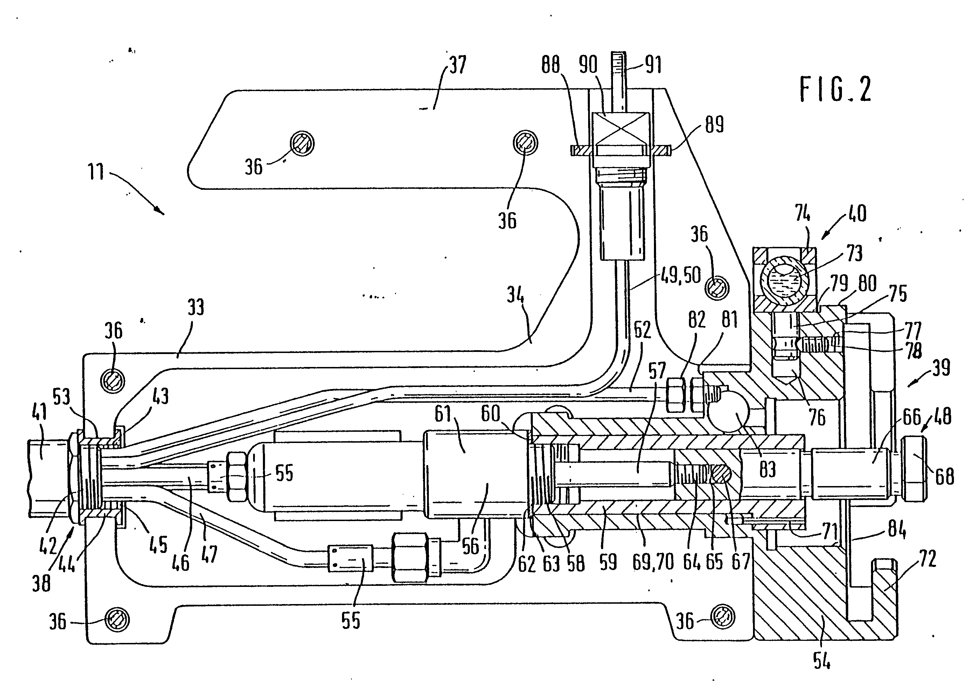

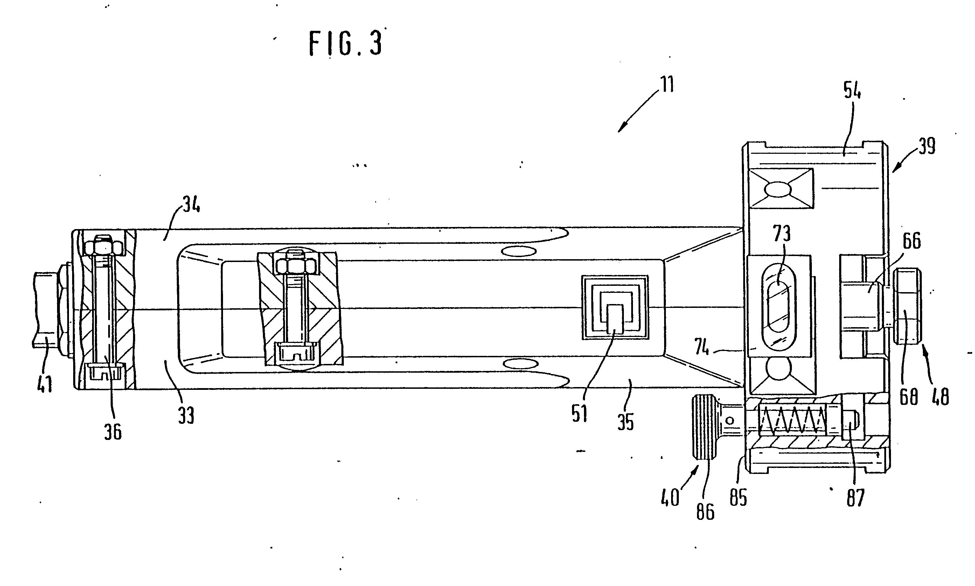

In Fig. 2 und 3 ist die Seitenansicht und Draufsicht der Spannzange 11 in Schnittdarstellung näher veranschaulicht. Der Grundkörper der Spannzange 11 besteht aus einem zweigeteilten Gehäuse 33, wobei die Seitenteile 34 und 35 mittels der Schraubenverbindung 36 lösbar verbunden sind. Der obere Teil des Gehäuses 33 ist als Griff 37, der hintere Teil als Druckschlauchaufnahme 38 und der vordere Teil als Kupplungs- 39, Spann- 48 und Zentriereinrichtung 40 ausgebildet. Die Spannzange 11 ist über Schnellverschlußkupplung 27 und Druckschläuche 26 an ein hydraulisches Pumpenaggregat 28 mit vorzugsweise pneumatischem Antrieb 30 (Fig. 1) angeschlossen. Die Druckschläuche 26 sind von einem nicht näher dargestellten Schutzschlauch umgeben, wobei der Schutzschlauch in einem Schneidring 41 befestigt ist. Der, dem hinteren Teil der Spannzange 11 zugewandte Bereich des Schneidringes 41 ist mit einem Außengewinde 42 versehen, das mit dem Innengewinde 43 der Gewindehülse 44 in Wirkverbindung steht. Die Gewindehülse 44 ist in einer Bohrung 53 in der hinteren Stirnseite der Seitenteile 34, 35 fest in dem Gehäuse 33 fixiert. Durch die Bohrung 45 der Gewindehülse 44 werden die Hochdruckschläuche 46, 47 zur Spanneinrichtung 48, die Schläuche 49, 50 zu der als Druckschalter ausgebildeten Steuereinrichtung 51 und der Schlauch 52 zum Kupplungsteil 54 geführt. Die Spanneinrichtung 48 besteht aus einem doppeltwirkenden Zylinder 56 mit einseitig wirkender Kolbenstange 57, der mit den das Hydrauliköl führenden Hochdruckschläuchen 46, 47 über Steckkupplungen 55 verbunden ist. Der Zylinder 56 ist in seinem zur Kolbenstange 57 weisenden Bereich als Gewindebolzen 58 ausgebildet, der in das Führungsteil 59 eingeschraubt ist. Zwischen der Stirnseite 60 des Führungsteils 59 und der durch Gewindebolzen 58 und Zylindergehäuse 61 gebildeten kreisringförmigen Anschlagfläche 62 ist eine Scheibe 63 aus Cu Zn 49Pb3 angeordnet. Die Kolbenstange 57 ist in ihrem vorderen Bereich mit einem Außengewinde 64 versehen, das in das Innengewinde 65 des Kupplungsbolzens 66 eingreift. Oberhalb der Einschraubung 64, 65 ist senkrecht zur Längsachse des Gehäuses 33 ein Stift 67 im Kupplungsbolzen 66 angeordnet, der in nicht näher dargestellten, im Führungsteil 59 vorgesehenen Schlitzen geführt ist und damit in Verbindung mit den Schlitzen ein Verdrehen des Kupplungsbolzens 66 verhindert.

Der im Führungsteil 59 geführte Kupplungsbolzen 66 besteht an seinem freitragenden Ende aus drei Kreissegmenten 68. Das am Außenumfang 69 zylinderförmig ausgebildete Führungsteil 59 ist in der Bohrung 70 des Kupplungsteiles 54 angeordnet und mit einem Spannstift 71 mit diesem verbunden. In seinem innerhalb des Gehäuses 33 liegenden Bereich ist das Kupplungsteil 54 zylindrisch ausgebildet, wobei das obere zum Griff 37 weisende Teilstück als Andrehung 81 zur Befestigung des Schlauches 52 mittels Schnellverschraubung 82 ausgebildet ist. Über Schlauch 52 und sich in der Andrehung 81 befindlichen Kanäleh 83 wird Formiergas in die Spanndorn 12 - Aufnahmebohrung 84 geführt.

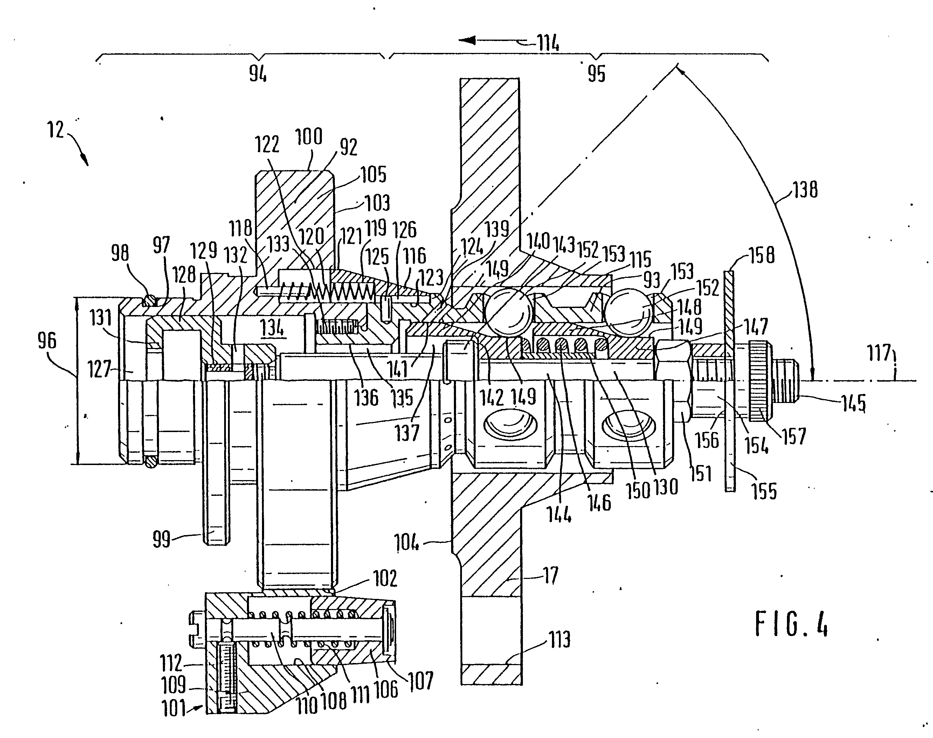

Das Kupplungsteil 54 besteht in seinem vorderen, aus dem Gehäuse 33 ragenden Bereich aus drei Kupplungsklauen 72 zur Aufnahme und Verriegelung der Spanndorne 12 (Fig. 4). In seinem zum Griff 37 weisenden Bereich ist eine Wasserwaage 73 in einem Aufnahmewinkel 74 angeordnet. Der Befestigungsbolzen 75 des Aufnahmewinkels 74 greift in die Bohrung 76 des Kupplungsteiles 54 ein und wird mittels einer Zylinderschraube 78, die in einer senkrecht zur Bohrung 76 angeordneten Gewindebohrung 77 vorgesehen ist, befestigt. Der Sitz 79 des Aufnahmewinkels 74 wird durch eine Anfräsung am zylindrischen Umfang 80 des vorderen Bereiches des Kupplungsteiles 54 gebildet.

An der zum Griff 37 weisenden Stirnseite 85 des Kupplungsteiles 54 ist ein federbetätigter Zentrierstecker 86 angeordnet, der bei Kupplung der Spanndorne 12 in den Klauen 72 der Spannzange 11 mit dem Zentrierbolzen 87 in eine, in den Spanndornen 12 befindliche, nicht näher dargestellte Zentrierbuchse einrastet und somit die Spanndorne 12 lagesicher zentriert.

Im Griff 37 ist mittels der im Einstich 89 fixierten Scheibe 88 ein 3/2 Wegeventil 90 befestigt, dem über die Schläuche 49, 50 Druckluft als Steuermedium zugeführt wird. Die Schaltung des 3/2 Wegeventils 90, das die Funktionsabläufe Spannen/Lösen und Formiergas An/Aus steuert, erfolgt mechanisch über den mit der Gewindestange 91 verbundenen Druckschalter 51.

In Fig. 4 ist ein Spanndorn 12 zur Innenspannung eines V-Flansches 17 mit einer Vorschweißflansch-Nennweite 50 mm für einen Rohraußendurchmesser von 57 mm näher dargestellt. Der aus zwei über Gewindestifte 133 miteinander verbundenen Drehteilen 92, 93 bestehende Grundkörper des Spanndornes ist in seinem hinteren, der Spannzange 11 zugewandten Bereich als Kupplung 94 und in seinem vorderen Bereich als Spannkörper 95 ausgebildet.

Der hintere äußere Durchmesser 96 des Drehteils 92, der an seinem Umfang einen O-Ring-Einstich 97 mit einem O-Ring 98 aufweist, entspricht in seinen Abmessungen den Abmessungen der Aufnahmebohrung 84 der Spannzange 11. Der O-Ring liegt nach Verdrehung der Kupplungsabschnitte 99 des Spanndornes 12 in den Kupplungsklauen 72 der Spannzange 11 am Umfang der Aufnahmebohrung 84 an und verhindert unkontrollierten Austritt von Formiergas. Die zum Bereich des Spannkörpers 95 weisende Stirnseite 103 des Drehteils 92 liegt rechtwinklig zur Spanndorn-Längsachse 117 und dient als Anlageflansch 105 der Anschraubseite 104 des V-Flansches 17. Die Mittenzentrierung des V-Flansches 17, der in Pfeilrichtung 114 mit der Bohrung 115 auf den Spanndorn 12 aufgeschoben wird, erfolgt durch eine elastisch in der Stirnseite 103 des Anlageflansches 105 und auf dem Drehteil 93 geführten konischen Büchse 116.

Die konische Büchse 116 ist über eine auf Stift 118 und Bohrung 119 geführte Feder 120 mit ihrem zylindrischen Abschnitt 121 elastisch in Bohrung 122 des Anlageflansches 105 und auf der Führungsfläche 123 des Drehteils 93 in Richtung der Spanndorn-Längsachse 117 bewegbar gelagert. Eine an der Führungsfläche 123 des Drehteiles 93 angedrehte Anschlagfläche 124 dient als Endbegrenzung des Verschiebeweges der konischen Büchse 116. Gegen Verdrehung ist die konische Büchse 116 über einen in der Führungsfläche 123 befestigten Stift 125 gesichert, dessen oberes aus der Führungsfläche ragendes Ende in eine Nut 126 der konischen Büchse 116 eingreift. Bei Verschiebung des V-Flansches 17 in Pfeilrichtung 114 bis zur Stirnseite 103 wird durch die der Pfeilrichtung 114 entgegenwirkenden Federkraft die konische Büchse 116 in die Bohrung 115 des V-Flansches gedrückt und der V-Flansch 17 mittenzentriert. Auf der Anfräsung 102 des Umfanges 100 des Anlageflansches 105 ist eine Zentriervorrichtung 101 mit nicht näher dargestellten Schrauben befestigt. Die Zentriervorrichtung 101 besteht aus einem im vorderen Bereich am Außenumfang 107 konisch ausgebildeten Arretierbolzen 106, der in einer Bohrung 108 des auf dem Anlageflansch 105 aufgeschraubten Grundkörpers 109 und mittels eines in zwei Stellungen einrastbaren Führungsstiftes 110 geführt wird. Über eine auf dem Führungsstift 110 angeordnete Feder 111 erfolgt nach Lösung der Arretierung 112 die elastische Zentrierung der Befestigungsbohrungen 113 des V-Flansches 17 symmetrisch zur Spanndorn-Längsachse 117.

In der Bohrung 127 des Drehteils 92 ist eine Druckübertragungsbüchse 128 bewegbar angeordnet, die in ihrem vorderen Bereich über eine Gewindeverbindung 129 mit dem Druckbolzen 130 verbunden ist. Der Druckbolzen 130 ist als zylindrische Welle 144 ausgebildet, an die im Mittelbereich ein Druckflansch 143 und im zum Spannkörper 95 weisenden Ende ein Gewinde 145 angedreht ist. Mit dem im hinteren Bereich als Aufnahme 131 ausgebildeten Teil der Druckübertragungsbüchse 128 sind die Kreissegmente 68 des Kupplungsbolzens 66 der Spannzange 11 arretierbar. Das über Bohrung 127 von der Spannzange 11 zugeführte Formiergas wird über die in der Gewindeverbindung 129 angeordnete Radialbohrung 132 in einen durch Bohrung 127 und vorderem Außenumfang der Druckübertragungsbüchse 128 gebildeten Raum 134 geleitet. Über den durch Druckbolzen 130 und Innenwand 136 der Durchgangsbohrung 137 gebildeten Ringspalt 135 strömt das Formiergas zu den im Drehteil 93 radial unter einen Winkel 138 angeordneten Ausströmbohrungen 139. Diese Ausströmbohrungen 139 sind durch den keilförmig ausgebildeten Kraftspannring 140 bei ungespanntem Spanndorn 12 durch die Anlagefläche 141 verschlossen. In die Ausdrehung 142 des Kraftspannringes 140 greift der an dem Druckbolzen 130 vorgesehene Druckflansch 143 ein, der den Kraftspannring 140 bei Zufuhr des Druckmediums entgegengesetzt zur Pfeilrichtung 114 verschiebt. Mit dem Kraftspannring 140 ist über eine Feder 146 und eine Büchse 150 ein Sekundärspannring 147 verbunden. Der Sekundärspannring 147 ist dabei ebenfalls wie der Kraftspannring 140 im Mittelteil 148 keilförmig und an den Enden 149 zylindrisch ausgebildet. Gegen axiale Verschiebung entgegengesetzt zur Pfeilrichtung 114 und zur axialen Einstellung des Verschiebeweges sind die Spannringe 140, 147 durch eine mit dem Gewinde 145 in Wirkverbindung stehende Mutter 151 verbunden. Auf dem zum Gewinde 145 des Druckbolzens 130 zylindrischen Enden 149 liegen im ungespannten Zustand des Spanndornes 12 kugeln 152 auf, die in Bohrungen 153 des die Spannringe 140, 147 und den Druckbolzen 130 umgebenden Drehteils 93 geführt sind.

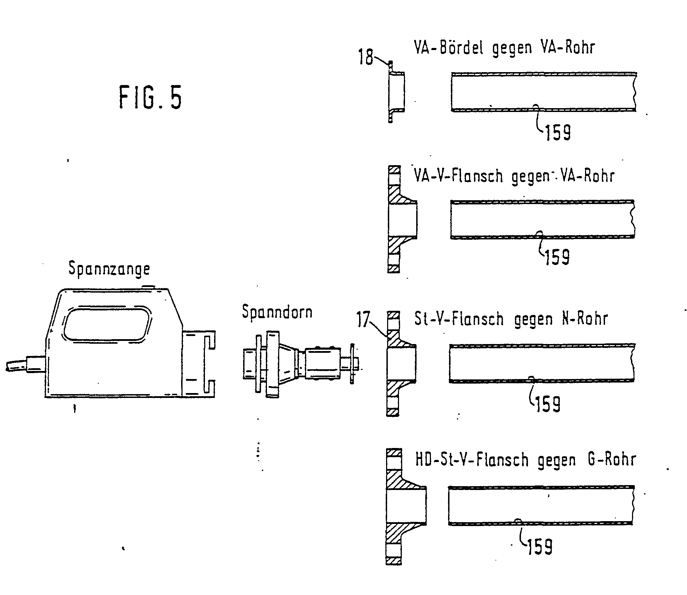

Über dem Gewinde 145 des Druckbolzens 130 liegt stirnseitig auf der Mutter 151 eine Distanzbüchse 154 an, auf deren freien Stirnseite 156 eine elastische Dichtscheibe 155, vorzugsweise Gummi-Dichtscheibe, mittels einer in das Gewinde 145 eingreifenden Rändelmutter 157 befestigt ist. Der äußere Umfang 158 der Dichtscheibe 155 liegt nach dem Zentrieren und Spannen eines Rohres 19 an der Innenwand 159 (Fig. 5) des Rohres 19 an.

In Fig. 5 ist eine Schweißteilübersicht der mit der Spannzange 11/Spanndorne 12 spann- und zentrierbaren Verbindungen dargestellt. Dabei ist der Spannzange 11 jeweils ein Spanndorn für eine V-Flansch-Nennweite von 25, 40, 50, 65, 80, 100 Millimetern zugeordnet. Die in der Praxis wesentlichen Flansch- bzw. Bördel gegen Rohr - Verbindungen bestehen dabei aus den Werkstoffkombinationen VA-Bördel gegen VA-Rohr, VA-V-Flansch gegen VA-Rohr, ST-V-Flansch gegen N-Rohr und HD-ST-V-Flansch gegen G-Rohr.

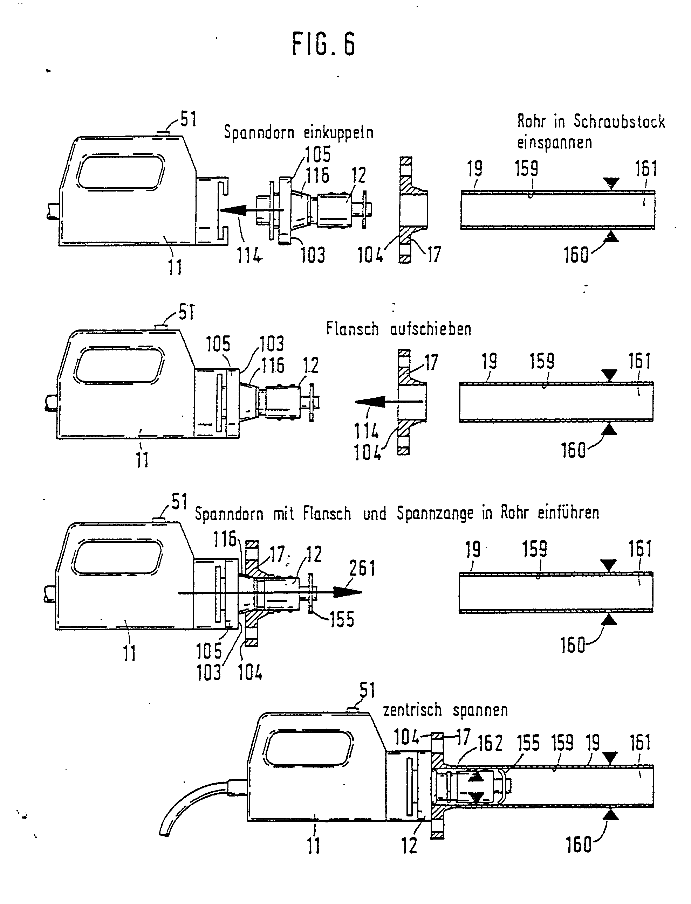

In Fig. 6 ist der Funktionsablauf des Spannens und Zentrierens eines V-Flansches 17 gegen Rohr 19 mit Spannzange 11 und Spanndorn 12 dargestellt. Vor der Spannung/Zentrierung des V-Flansches 17 gegen Rohr 19 wird ein, der Nennweite des V-Flansches 17, bzw. des Rohrinnendurchmessers entsprechender Spanndorn 12 ausgewählt. Anschließend wird der Spanndorn 12 durch Verdrehung der Kupplungsabschnitte 99 in den Kupplungsklauen 72 in die Spannzange 11 eingekuppelt. Dabei erfolgt die immer gleiche Lagebestimmung der Spanndorne 12 in der Spannzange 11 durch die Verriegelung des Zentrierbolzens 87 (Fig. 3) in einer nicht näher dargestellten Zentrierbuchse des Spanndornes 12. Gleichzeitig mit der Kupplung von Spannzange 11/Spanndorn 12 wird der Kupplungsbolzen 66 mit der Druckübertragungsbüchse 128 über Kreissegment 68 in Aufnahme 131 verbunden. Auf den Spanndorn 12 wird nun der V-Flansch 17 in Pfeilrichtung 114 aufgeschoben.

Die Einheit Spannzange 11/Spanndorn 12 mit V-Flansch 17 wird mit dem Spannkörper 95 in die Innenbohrung 161 des in einem Schraubstock 160 oder dem Zentrisch-Spannstock 22 gespannten Rohres 19 unter Druck in Pfeilrichtung 114 derart eingeführt, bis der V-Flansch 17 mit seiner Anschraubseite 104 an der Stirnseite 103 des Anlageflansches 105 anliegt und die Wasserwaage 73 eine waagerechte Position anzeigt. Durch Betätigung des Druckschalters 51 wird der doppelwirkende Zylinder 56 mit Hydrauliköl beaufschlagt. Die Kolbenstange 57 bewegt sich in Pfeilrichtung 261 und verschiebt über Kupplungsbolzen 66, Druckübertragungsbüchse 128 und Druckbolzen 130, Kraft- und Sekundärspannring 140, 147, so daß die Kugeln 152 über die keilförmigen Mittelteile 148 der Spannringe 140, 147 an die Innenwand 159 des Rohres 19 gedrückt werden und diese zentrisch spannen. Gleichzeitig mit Betätigung des Druckschalters zum Spannen wird die Formiergaszuführung eingeschaltet, das jedoch über ein Zeitverzögerungsglied zeitlich später an der Schweißstelle 162 ansteht. Mit der Spannung des Spannkörpers 95 erfolgt eine Verschiebung des Kraft- und Sekundärspannringes 140, 147 in Pfeilrichtung 261. Durch diese Verschiebung wird die Öffnung der Ausströmbohrungen 139 eingeleitet. Formiergas fließt über Schlauch 52, Kanäle 83, Bohrung 127, Raum 134, Ringspalt 135, Ausströmbohrungen 139 in den durch die Innenwand 159 des Rohres 19 und die elastische Dichtscheibe 155 gebildeten Raum. Dabei ist die Formiergasausströmrichtung durch die unter einem Winkel 138 angeordneten Ausströmbohrungen 139 direkt auf die Nahtwurzel gerichtet.

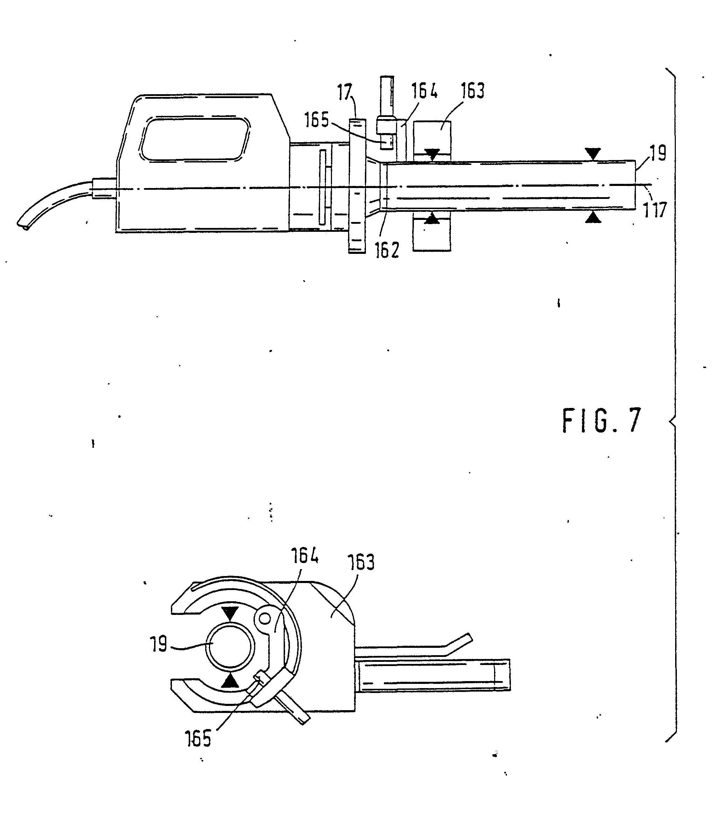

In Fig. 7 ist der Funktionsablauf des Schweißens eines gespannten/zentrierten V-Flansches 17 gegen Rohr 19 schematisch dargestellt. Die Schweißzange 163 wird seitlich von der Schweißstelle 162 auf das Rohr 19 aufgesetzt, senkrecht zur Spanndorn-Längsachse 117 ausgerichtet und mit nicht näher dargestellten Befestigungsmitteln festgespannt. Auf der Schweißzange 163 ist ein Fahrwerk 164 angeordnet, welches in der Schweißzange 163 gehalten und somit orbital um das Rohr 19 geführt werden kann. Der Schweißbrenner 165, der ebenso wie nicht näher dargestellte Brennerverstell- und Pendelvorrichtungen sowie eine Drahtvorratsrolle am Fahrwerk 164 befestigt ist, wird nun in Abhängigkeit von verschiedenen Schweißparametern, wie beispielsweise Höhe zur Schweißnaht, Breite der Schweißnaht, positioniert. Abschließend erfolgt das Schweißen durch den am Fahrwerk 164 befestigten und mit diesem orbital um die Schweißzange 163 und das Rohr 19 geführten Schweißbrenner 165. Dabei ist der Schweißbrenner 165 vorzugsweise als WIG-Schweißbrenner ausgebildet.

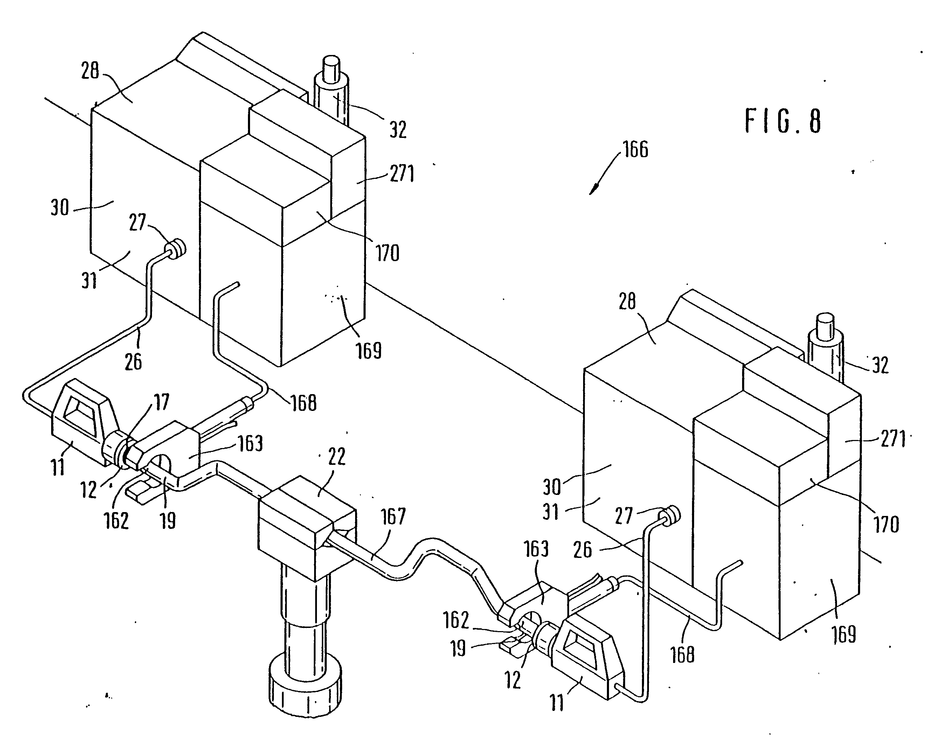

In Fig. 8 ist ein Schweißarbeitsplatz 166 mit zwei Spanneinheiten Spannzange 11/Spanndorn 12, die an einer rotationsunsymmetrischen Rohrleitung 167 angeordnet sind, in perspektivischer Darstellung näher veranschaulicht. Die Spanneinheit Spannzange 11/Spanndorn 12 und die Schweißzange 163 sind entsprechend den Fig. 6, 7 und den dazugehörenden Beschreibungspassagen mit dem V-Flansch 17 und dem Rohr 19 verbunden und in bzw. auf dem Rohr 19 positioniert. Die Rohrleitung 167 wird in einem stationär angeordneten Zentrisch-Spannstock 22 gegen axiale Verschiebung gehalten. Vorteilhaft ist die Rohrleitung 167 zweiseitig bearbeitbar. Die Schweißzange 11 ist über Druckschläuche 26 und Schnellverschlußkupplung 27 an ein Pumpenaggregat 28 mit pneumatischem Antrieb 30 und Druckübersetzer 31 angeschlossen. Zur Versorgung der Schweißstelle 162 mit Formiergas ist eine Schutzgasflasche 32 vorgesehen. Die Schweißzange 163 ist über Leitung 168 an einen Schweißtrafo 169 angeschlossen. In dem Schweißtrafo 169 ist eine als Baueinheit ausgebildete Steuerung 170 und eine Kaltdrahtzuführung 271 integriert.

## Patentansprüche

1. Halte- und Zentriervorrichtung für zwei zusammenzuschweißende Teile (17, 18; 19) wobei die Teile in der gehaltenen und zentrierten Schweißposition zusammenschweißbar sind, mit einem Druckaggregat (28, 30, 31) für ein Mittel, das mit Hilfe einer Steuereinrichtung (51) einen Spanndorn (12) betätigt, welcher Spannglieder (152) aufweist, die über eine Betätigung der Steuereinrichtung (51) radial zur Längsachse (117) des Spanndornes (12) verschiebbar sind und die radiale Verschiebung der Spannglieder (152) über eine axiale Verschiebung von Spannkeilen (140, 147) erfolgt, welche an den Spanngliedern (152) anliegen,
dadurch gekennzeichnet,
daß der Spanndorn (12) einen rechtwinklig zu seiner Längsachse (117) angeordneten Anlageflansch (105) für einen Flansch (17) bzw. Bördel (18) als erstem der zusammenzuschweißenden Teile aufweist, gegen die ein Rohr (19) als zweitem der zusammenzuschweißenden Teile in zentrierter Position spannbar ist und in dem Spanndorn (12) eine Schutzgasführung (52, 83, 84, 127, 132, 134, 135) vorgesehen ist, deren Austritt (139) gegen die Schweißnahtwurzel gerichtet ist wobei das Rohr (19) mit dem Flansch (17) bzw. Bördel (18) mittels einer auf das Rohr (19) aufgesetzten und orbital um das Rohr (19) geführten Schweißzange (163) verschweißt wird.

2. Halte- und Zentriereinrichtung nach Anspruch 1,
dadurch gekennzeichnet,
daß die Halte- und Zentriereinrichtung (10) eine Spannzange (11) mit auswechselbaren Spanndornen (12) zur Innenspannung aufweist.

3. Halte- und Zentriereinrichtung nach Anspruch 1 oder 2,
dadurch gekennzeichnet,
daß die Spannzange (11) einen von dem Medium axial verschiebbaren Kupplungsbolzen (66) aufweist, der über einen Druckbolzen (130) die Spannkugeln (152) radial verschiebt.

4. Halte- und Zentriereinrichtung nach einem der Ansprüche 1 bis 3,

dadurch gekennzeichnet,

daß auf dem Druckbolzen (130) Spannringe (140, 147) angeordnet sind, von denen der in Wirkrichtung erste Spannring (140) an einem mit dem Druckbolzen (130) verbundenen Druckflansch (143) anliegt und der zweite Spannring (140) über eine Feder (146) mit dem ersten Spannring (140) verbunden ist.

5. Halte- und Zentriereinrichtung nach einem der Ansprüche 1 bis 4,

dadurch gekennzeichnet,

daß die Spannkugeln (152) in einem die Spannringe (140, 147) umgebenden Drehteil (93) in Bohrungen (153) geführt sind.

6. Halte- und Zentriereinrichtung nach einem der Ansprüche 1 bis 5,

dadurch gekennzeichnet,

daß in der Spannzange (11) und den Spanndornen (12) eine Schutzgasführung (52, 83, 84, 127, 132, 134, 135) vorgesehen ist, deren Austritt (139) gegen die Schweißnahtwurzel gerichtet ist und zur Abdichtung des Rohrinnenraumes eine am Spanndorn (12) befestigte elastische Dichtscheibe (155) vorgesehen ist.

7. Halte- und Zentriereinrichtung nach einem der Ansprüche 1 bis 6,

dadurch gekennzeichnet,

daß der Austritt (139) bei nicht anliegenden Spannkugeln (152) an den keilförmigen Flächen der Spannringe (140, 147) geschlossen ist und bei anliegenden Spannkugeln (152) an den keilförmigen Flächen der Spannringe (140, 147) geöffnet ist.

8. Halte- und Zentriereinrichtung nach einem der Ansprüche 1 bis 7,

dadurch gekennzeichnet,

daß in dem Anlageflansch (105) eine Bohrung (122) vorgesehen ist, in welcher eine konische Büchse (116) mit zur Bohrung (122) zylindrischem Abschnitt (121) elastisch geführt ist und die Büchse (116) entlang einer Führungsfläche (123) des Drehteils (93) bis zu einer Anschlagfläche (124) verschiebbar ist.

9. Halte- und Zentriereinrichtung nach einem der Ansprüche 1 bis 8,

dadurch gekennzeichnet,

daß an dem Anlageflansch (105) eine Wasserwaage (73) sowie ein Flanschlocharretierstift (106) befestigt ist.

**Claims**

1. Holding and centering apparatus for two parts (17, 18; 19) to be welded together, the parts being weldable together in the held and centered welding position, with a pressure unit (28, 30, 31) for a medium which, with the aid of a control device (51), actuates a mandrel (12), which has clamping elements (152), which are displaceable radially to the longitudinal axis (117) of the mandrel (12) by means of an actuation of the control device (51), and the radial displacement of the clamping elements (152) takes place by means of an axial displacement of clamping wedges (140, 147), which bear against the clamping elements (152), characterized in that the mandrel (12) has a bearing flange (105), which is arranged at right angles to the longitudinal axis (117) of the said mandrel and is for a flange (17) or bead (18), as first of the parts to be welded together, against which a pipe (19), as second of the parts to be welded together, can be clamped in centred position, and in the mandrel (12) and there is provided a protective gas duct (52, 83, 84, 127, 132, 134, 135), the outlet (139) of which is directed against the weld root, the pipe (19) being welded to the flange (17) or bead (18) by means of a pair of welding tongs (163), fitted onto the pipe (19) and orbitally led around the pipe (19).

2. Holding and centering apparatus according to Claim 1, characterized in that the holding and centering apparatus (10) has a collet (11) with interchangeable mandrels (12) for internal clamping.

3. Holding and centering apparatus according to Claim 1 or 2, characterized in that the collet (11) has a coupling bolt (66) which can be axially displaced by the medium and radially displaces the clamping balls (152) via a thrust bolt (130).

4. Holding and centering apparatus according to one of claims 1 to 3, characterized in that on the thrust bolt (130) there are arranged clamping rings (140, 147), of which the first clamping ring (140), in effective direction, bears against a thrust flange (143), connected to the thrust bolt (130), and the second clamping ring (140) is connected to the first clamping ring (140) via a spring (146).

5. Holding and centering apparatus according to one of Claims 1 to 4, characterized in that the clamping balls (152) are guided in bores (153) in a rotary part (93) surrounding the clamping rings (140, 147).

6. Holding and centering apparatus according to one of Claims 1 to 5, characterized in that in the collet (11) and the mandrels (12) there is provided a protective gas duct (52, 83, 84, 127, 132, 134, 135), the outlet (139) of which is directed against the weld root and, for sealing-off of the pipe interior, a flexible sealing disc (155), fastened to the mandrel (12), is provided.

7. Holding and centering apparatus according to one of Claims 1 to 6, characterized in that the outlet (139) is closed when the clamping balls (152) are not bearing against the wedge-shaped surfaces of the clamping rings (140, 147) and is open when the clamping balls (152) are bearing against the wedge-shaped surfaces of the clamping rings (140, 147).

8. Holding and centering apparatus according to one of claims 1 to 7, characterized in that in the bearing flange (105) there is provided a bore (122), in which a conical bush (116) is flexibly guided by a section (121) cylindrical with respect to the bore (122), and the bush (116) is displaceable along a guide surface (123) of the rotary part (93) up to a stop surface (124).

9. Holding and centering apparatus according to one of Claims 1 to 8, characterized in that a spirit level (73) and a flange-hole locking pin (106) are fastended on the bearing flange (105).

**Revendications**

1. Dispositif de maintien et de centrage pour deux pièces à souder ensemble (17, 18; 19), ces pièces étant susceptibles d'être soudées ensemble dans la position de soudage ainsi maintenue et centrée, dispositif comportant un ensemble de pression (28, 30, 31) pour un fluide, qui, à l'aide d'un moyen de commande (51) actionne un mandrin de serrage (12) lequel comporte des organes de serrage (152), qui, par l'intermédiaire d'un actionnement du moyen de commande (51) sont susceptibles de se déplacer radialement par rapport à l'axe longitudinal (117) du mandrin de serrage (12), et ce déplacement radial des organes de serrage (152) s'effectuant par l'intermédiaire d'un déplacement axial de coins de serrage (140, 147) qui s'appliquent contre les organes de serrage (152), dispositif caractérisé en ce que le mandrin de serrage (12) comporte une collerette d'appui (105) disposée à angle droit par rapport à son axe (117) pour une bride (17) ou un collet (18), constituant la première des pièces à souder ensemble, collerette contre laquelle un tube (19), constituant la seconde des pièces à souder ensemble, est susceptible d'être serrée en position de centrage, tandis qu'il est prévu dans le mandrin de serrage (12) une conduite de gaz de protection (52, 83, 84, 127, 132, 134, 135), dont la sortie (139) est dirigée vers la racine du cordon de soudure, le tube (19) étant soudé avec la bride (17) ou bien le collet (18) au moyen d'un support de chalumeau de soudage (163) placé sur le tube (19) et guidé en orbite autour de ce tube (19).

2. Dispositif de maintien et de centrage selon la revendication 1, caractérisé en ce que le dispositif de maintien et de centrage (10) comporte une pince de serrage (11) avec des mandrins de serrage (12) interchangeables pour assurer le serrage interne.

3. Dispositif de maintien et de centrage selon la revendication 1 ou 2, caractérisé en ce que la pince de serrage (11) comporte un axe d'accouplement (66) susceptible d'être déplacé axialement par le fluide, et qui, par l'intermédiaire d'un axe de poussée (130) déplace radialement les billes de serrage (152).

4. Dispositif de maintien et de centrage selon une des revendications 1 à 3, caractérisé en ce que, sur l'axe de poussée (130) sont disposés des anneaux de serrage (140, 147), le premier (140) de ces anneaux de serrage rencontré dans le sens où s'exerce leur action, s'appliquant contre une bride de poussée (143) reliée à l'axe de poussée (130), tandis que le second anneau de serrage (147) est relié au premier anneau de serrage (140) par l'intermédiaire d'un ressort (146).

5. Dispositif de maintien et de centrage, selon une des revendications 1 à 4, caractérisé en ce que les billes de serrage (152) sont guidées dans des perçages (153) dans une pièce rotative (93) entourant les anneaux de serrage (140, 147).

6. Dispositif de maintien et de centrage selon une des revendications 1 à 5, caractérisé en ce qu'il est prévu dans la pince de serrage (11) et les mandrins de serrage (12), une conduite de gaz de protection (52, 83, 84, 127, 132, 134, 135) dont la sortie (139) est dirigée vers la racine du cordon de soudure, tandis que pour étancher l'espace interne du tube, il est prévu un disque d'étanchéité élastique (155) fixé sur le mandrin de serrage (12).

7. Dispositif de maintien et de centrage selon une des revendications 1 à 6, caractérisé en ce que la sortie (139) est fermée lorsque les billes de serrage (152) ne sont pas appliquées contre les surfaces en forme de coin des anneaux de serrage (140, 147), tandis que lorsque les billes de serrage (152) sont appliquées contre les surfaces en coin des anneaux de serrage (140, 147) cette sortie est ouverte.

8. Dispositif de maintien et de centrage selon une des revendications 1 à 7, caractérisé en ce qu'il est prévu dans la collerette d'appui (105) un alésage (122) dans lequel est guidée élastiquement par une partie cylindrique (121) vis à vis de l'alésage (122), une douille conique (116), et cette douille (116) est susceptible de se déplacer le long d'une surface de guidage (123) de la pièce rotative (93) jusqu'à une surface de butée (124).

9. Dispositif de maintien et de centrage selon une des revendications 1 à 8, caractérisé en ce que, sur la collerette d'appui (105) est fixé un niveau à bulles (73) ainsi qu'un goujon (106) de blocage de trou de bride.

FIG.1

EP 0 103 242 B1

FIG.2

EP 0 103 242 B1

EP 0 103 242 B1

FIG. 3

5

FIG.4

EP 0 103 242 B1

# FIG. 5

Spannzange

Spanndorn

18 — VA-Bördel gegen VA-Rohr

159

VA-V-Flansch gegen VA-Rohr

159

17 — St-V-Flansch gegen N-Rohr

159

HD-St-V-Flansch gegen G-Rohr

159

# FIG. 6

Spanndorn einkuppeln

Rohr in Schraubstock
einspannen

Flansch aufschieben

Spanndorn mit Flansch und Spannzange in Rohr einführen

zentrisch spannen

FIG. 7

FIG. 8

EP 0 103 242 B1